# FASCICULE DE BREVET EUROPEEN

(11) **EP 4 124 389 B1**
(45) Date de publication et mention de la délivrance du brevet: **12.02.2025**
(21) Numéro de dépôt: 22182128.3
(22) Date de dépôt: 30.06.2022
(51) Int. Cl.: B04C 5/04, B01D 45/12, B01D 45/16, B01J 8/00, B04C 5/081, B04C 5/13, B04C 5/28

(54) **SYSTÈME DE FILTRATION D'UN AÉROSOL AU MOYEN D'UNE PLURALITÉ DE SÉPARATEURS PAR EFFET CYCLONE ET PROCÉDÉ DE FILTRATION**
SYSTEM ZUM FILTERN EINES AEROSOLS MITTELS EINER VIELZAHL VON ABSCHEIDERN DURCH ZYKLONEFFEKT UND ENTSPRECHENDES FILTERVERFAHREN
SYSTEM FOR FILTERING AN AEROSOL BY MEANS OF A PLURALITY OF CYCLONE-EFFECT SEPARATORS AND FILTERING METHOD

(30) Priorité: 27.07.2021 FR 2108178
(43) Date de publication de la demande: 01.02.2023
(73) Titulaire: Siebec, 38120 Saint-Egreve (FR)
(72) Inventeur: PESENTI, Adrien, 38120 SAINT-EGREVE (FR)
(74) Mandataire: Talbot, Alexandre

(56) Documents cités:
- EP-A1- 0 841 085
- US-A- 4 389 307
- US-A1- 2009 139 192

## Description

### Domaine technique

L'invention concerne un système de filtration et un procédé de filtration.

### État de la technique

Dans de nombreux domaines techniques, il est connu d'injecter une huile afin de faciliter une opération de découpe, de gravure, de refroidissement ou de traitement de surface. L'huile injectée est souvent sous la forme de gouttelettes qui saturent l'atmosphère de l'équipement de découpe, de gravure, de refroidissement ou de traitement de surface. Ces atmosphères chargées en huile sont appelées brouillards d'huiles.

Il est particulièrement intéressant de récupérer l'huile afin de la réutiliser et/ou de la recycler et ainsi de maintenir une atmosphère saine. Il y a donc un intérêt à réaliser la filtration de l'atmosphère chargée en gouttelettes d'huile de manière à séparer la partie gazeuse et la partie liquide. Le brouillard d'huile est transféré à un dispositif de filtration qui est configuré pour séparer le gaz porteur et les gouttelettes d'huile.

Il est connu des systèmes de filtration qui effectuent la filtration par effet cyclone. La séparation par effet cyclone permet d'avoir une séparation du gaz porteur et des gouttelettes d'huile sans utiliser un ou plusieurs filtres qui s'encrassent et qui doivent donc être nettoyés régulièrement.

Le rendement de séparation est fonction de l'accélération centrifuge subie par les gouttelettes, du nombre de tours effectués dans le cyclone, de leur densité et de leur taille. Il y a donc un intérêt à rechercher une configuration de cyclone qui est la plus adaptée aux gouttelettes d'huile.

De manière général, l'efficacité de filtration est d'autant plus grande que les vitesses sont élevées ou que le nombre de cyclones est important. Un optimum est donc à trouver entre complexité de réalisation et consommation énergétique.

Le document US2009/0139192 A1 décrit un système de filtration d'un aérosol au moyen d'une pluralité de séparateurs par effet cyclone.

### Exposé de l'invention

Un objet de l'invention consiste à fournir un système de filtration qui présente un meilleur rapport entre la consommation énergétique et sa compacité tout en conservant la fourniture d'une bonne séparation entre les particules et le milieu gazeux de l'aérosol.

On tend à résoudre ces inconvénients au moyen d'un système de filtration qui comporte.
- un canal d'alimentation ayant une première extrémité destinée à être connectée à un organe de fourniture configuré pour fournir un aérosol à traiter ;
- une pluralité de séparateurs par effet cyclone, chaque séparateur par effet cyclone ayant une entrée débouchant dans le canal d'alimentation.

Plusieurs séparateurs par effet cyclone de la pluralité de séparateurs par effet cyclone et leurs entrées respectives sont disposés consécutivement le long du canal d'alimentation et d'un même côté du canal d'alimentation. Deux entrées consécutives de deux séparateurs par effet cyclone de la pluralité de séparateurs par effet cyclone d'un même côté du canal d'alimentation sont disposées à des hauteurs différentes et/ou possèdent des sections différentes. Selon un aspect de l'invention, le canal d'alimentation est obstrué ou réduit par une pluralité de déviateurs de flux, chaque déviateur de flux étant configuré pour dévier une partie d'un flux de l'atmosphère chargée en gouttelettes d'huile en direction d'un des séparateurs par effet cyclone correspondants.

De manière préférentielle, le canal d'alimentation est connecté à N séparateurs par effet cyclone et dans lequel chaque déviateur de flux dévie 1/N de la section initiale du canal d'alimentation vers un séparateur par effet cyclone correspondant et réduit la section du canal d'alimentation d'une valeur égale à 1/N pour les séparateurs par effet cyclone à suivre selon le sens d'avancement du flux d'aérosol.

Avantageusement, le système de filtration est constitué par uniquement deux pièces, une première pièce définissant la partie inférieure des séparateurs par effet cyclone, la partie inférieure du canal d'alimentation et éventuellement les séparateurs de flux le cas échéant, la deuxième pièce formant un capot refermant le canal d'alimentation et refermant les séparateurs par effet cyclone.

L'invention a également pour objet un procédé de filtration qui est performant et simple à utiliser.

On tend à atteindre ce résultat au moyen d'un procédé de filtration d'un aérosol comportant des particules et un milieu gazeux comportant les étapes suivantes :
- fournir un système de filtration selon l'une quelconque des configurations précédentes ;
- alimenter le système de filtration avec un aérosol ;
- récupérer les particules en sortie des séparateurs par effet cyclone.

De manière préférentielle, l'aérosol est un brouillard d'huile et de l'huile est récupéré en sortie des séparateurs par effet cyclone.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1, illustre schématiquement une vue en coupe d'un système de filtration selon un premier mode de réalisation ;
- la figure 2, illustre schématiquement un des côtés du système de filtration selon le premier mode de réalisation en direction de l'entrée du canal d'alimentation ;
- la figure 3, illustre schématiquement une section de l'entrée du canal d'alimentation ;
- la figure 4, illustre schématiquement une section du canal d'alimentation entre les premiers séparateurs et les deuxièmes séparateurs par effet cyclone ;
- la figure 5, illustre schématiquement une section du canal d'alimentation entre les deuxièmes séparateurs et les troisièmes séparateurs par effet cyclone ;
- la figure 6, illustre schématiquement une section du canal d'alimentation entre les troisièmes séparateurs et les quatrièmes séparateurs par effet cyclone.

### Description détaillée

Le système de filtration est un système de filtration 1 d'un aérosol. L'aérosol est formé par un ensemble de particules à l'état solide ou liquide qui sont en suspension dans un milieu gazeux. Par exemple, le système de filtration est un système de filtration d'une atmosphère chargée en gouttelettes d'huile. Le système de filtration est configuré pour séparer l'huile présente dans l'atmosphère sous la forme de gouttelettes et le gaz porteur qui peut être de l'air. Le gaz porteur supporte les gouttelettes d'huile. Le système de filtration est configuré pour faciliter la récupération des particules et plus particulièrement de l'huile.

Les particules sont évacuées par une première sortie 2. Le gaz porteur est évacué par une autre sortie 3 et peut aussi être évacué en partie par la première sortie. De manière avantageuse, les particules sont évacuées par une sortie inférieure alors que le gaz porteur est évacué par une sortie supérieure pour profiter de la différence de densité entre ces deux composants. La sortie inférieure est à une altitude plus faible que la sortie supérieure.

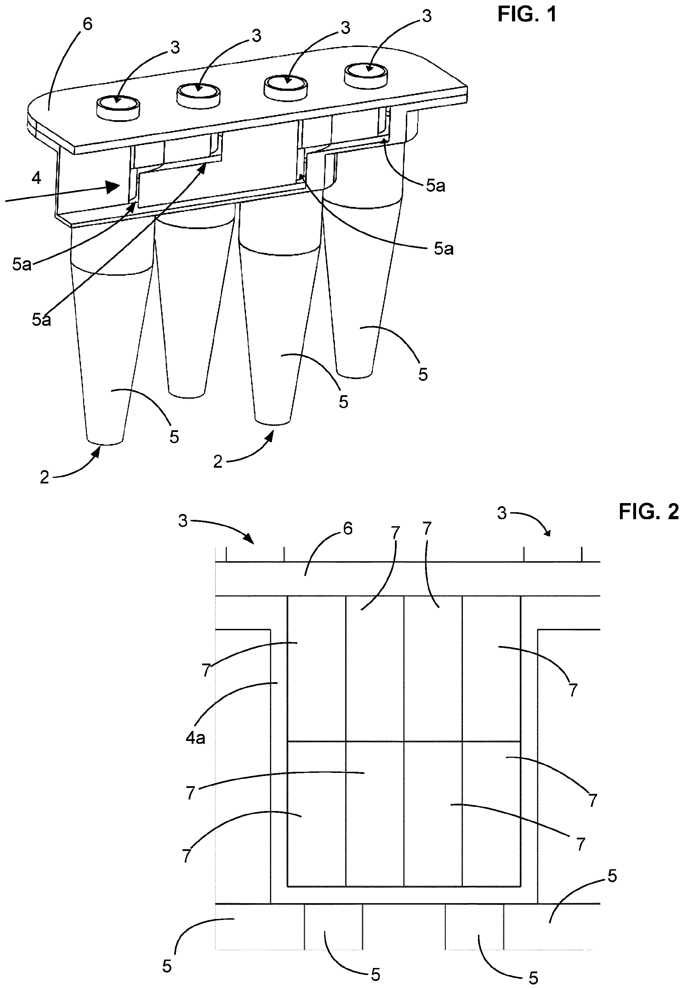

Le système de filtration 1 comporte un canal d'alimentation 4 ayant une première extrémité destinée à être connectée à un organe de fourniture configuré pour fournir un aérosol à traiter qui est par exemple la source d'une atmosphère chargée en gouttelettes d'huile. Le canal d'alimentation 4 reçoit un mélange contenant un gaz porteur et des particules, par exemple des gouttelettes. Si l'aérosol est un brouillard d'huile, ce dernier peut être fourni à partir d'un équipement utilisant l'huile et formant le bouillard d'huile. En alternative, l'aérosol est fourni par un réservoir recevant l'atmosphère à traiter. La flèche illustrée à la figure 1 représente le sens d'écoulement d'un brouillard d'huile dans le canal d'alimentation 4. L'aérosol est mis en mouvement au moyen d'un système de ventilation, par exemple un ventilateur. Selon les configurations, le système de ventilation est disposé en amont et/ou en aval du système de filtration 1 de sorte que l'aérosol pénètre dans le système de filtration 1 avec une certaine vitesse.

Le canal d'alimentation 4 est relié à une pluralité de séparateurs par effet cyclone 5. Un séparateur par effet cyclone 5 comporte une entrée 5a recevant le mélange à séparer et il possède deux sorties distinctes. Chaque séparateur par effet cyclone 5 possède une première sortie 2 destinée à récupérer les particules de l'aérosol, de préférence l'huile et une deuxième sortie 3 destinée à récupérer le gaz porteur dépourvu d'huile ou avec une teneur en huile inférieure à la teneur en huile à l'entrée 5a. Le séparateur par effet cyclone 5 profite de l'effet de la gravité pour séparer les particules et le gaz porteur.

L'entrée 5a de chaque séparateur par effet cyclone 5 est reliée au canal d'alimentation 4 de sorte que chaque séparateur par effet cyclone 5 reçoit une fraction du flux de l'atmosphère à traiter. Les séparateurs par effet cyclone 5 ne sont pas montés en série mais en parallèle. Les séparateurs par effet cyclone 5 reçoivent la même atmosphère à traiter ou sensiblement la même atmosphère à traiter sur leurs entrées 5a.

Un séparateur à effet cyclone 5 est un séparateur qui comporte une entrée 5a s'engageant dans un cône ou dans une structure ayant sensiblement la forme d'un cône. Dans le mode de réalisation illustré, la partie supérieure du séparateur à effet cyclone 5 possède une section cylindrique circulaire alors que la partie inférieure possède une section conique et plus particulièrement tronconique. L'extrémité inférieure du séparateur par effet cyclone 5 est ouverte de manière à former la sortie 2 destinée à l'extraction de l'huile. La partie supérieure du séparateur par effet cyclone 5 est recouverte par un capot 6 qui définit une ouverture traversante. L'ouverture traversante forme la sortie 3 pour le gaz porteur ayant une teneur faible en huile. De manière préférentielle, les séparateurs à effet cyclone sont identiques.

Afin d'augmenter l'efficacité de la séparation entre le gaz porteur et les particules notamment l'huile, il est intéressant d'avoir un séparateur par effet cyclone 5 ayant un petit diamètre. Plus le diamètre est faible et plus l'effet centrifuge est important pour une vitesse donnée de l'atmosphère à traiter dans le canal d'alimentation 4. Il est donc avantageux d'avoir une diminution de la section de la partie conique pour augmenter la vitesse de circulation du gaz et ainsi mieux séparer l'huile.

Cependant, plus le diamètre du séparateur par effet cyclone 5 est faible et plus le volume de gaz traité est faible. Il y a donc un intérêt à alimenter plusieurs séparateurs à effet cyclone 5 montés en parallèle de manière à augmenter la quantité de gaz porteur traité pour un temps donné.

Afin de faciliter l'alimentation des séparateurs par effet cyclone 5, il est avantageux de monter les séparateurs par effet cyclone 5 consécutivement le long du canal d'alimentation 4. Les entrées 5a des séparateurs par effet cyclone 5 sont disposées consécutivement le long du canal d'alimentation 4. Il est également avantageux d'avoir un canal d'alimentation 4 rectiligne ou faiblement courbé pour limiter la perte de charge le long du canal d'alimentation 4. Le canal d'alimentation 4 se divise en de multiples portions qui alimentent chacune un séparateur par effet cyclone 5.

De manière préférentielle, le système de filtration 1 possède un nombre pair de séparateurs par effet cyclone 5. Les séparateurs par effet cyclone 5 sont répartis symétriquement par rapport à la direction longitudinale du canal d'alimentation 4 de manière à ne pas perturber le flux de l'atmosphère chargée en particules. Il est avantageux de prélever deux portions identiques du flux de gaz porteur symétriquement par rapport au plan longitudinale médian du canal d'alimentation 4 pour ne pas perturber le flux et faciliter l'obtention d'un flux maitrisé dans le séparateur par effet cyclone 5. En d'autres termes, la même quantité de flux est prélevée sur le côté droit et le côté gauche du canal d'alimentation 4.

Afin de former un système de filtration compact, il est avantageux de décaler les séparateurs par effet cyclone 5 transversalement par rapport au canal d'alimentation 4, c'est-à-dire selon le sens de la largeur du canal d'alimentation 4. Les séparateurs sont disposés en quinconce. De cette manière, avec une même longueur de canal d'alimentation 4, il est possible de connecter plus de séparateurs par effet cyclone 5 sans trop augmenter la largeur du système de filtration.

Avantageusement, deux entrées 5a consécutives de deux séparateurs par effet cyclone 5 de la pluralité de séparateurs par effet cyclone 5 d'un même côté du canal d'alimentation 4 sont disposées consécutivement et à des hauteurs différentes. Les deux entrées 5a sont disposées à des niveaux différents. Par exemple, la première entrée 5a est à un niveau inférieur du canal d'alimentation 4 et la deuxième entrée 5a est à un niveau supérieur du canal d'alimentation 4. Le décalage des entrées 5a sur la hauteur du canal d'alimentation 4 permet d'améliorer la captation du flux de gaz porteur en limitant les perturbations sur le flux pour les autres entrées à suivre. La hauteur est mesurée selon une direction verticale.

Une pluralité de déviateurs de flux 7 sont présents qui dévient le flux de gaz porteurs vers les entrées de séparateur par effet cyclone 5. Selon les configurations les déviateurs sont installés dans le canal d'alimentation 4 ou ils sont formés par la paroi latérale 4a du canal d'alimentation. Dans le mode de réalisation illustré à la figure 1, les déviateurs sont formés par la paroi latérale 4a du canal d'alimentation 4. Les déviateurs de flux 7 obstruent ou réduisent la section active du canal d'alimentation 4 pour dévier une partie du flux vers le séparateur à effet cyclone 5 à alimenter et réduire la section du canal d'alimentation 4 pour les séparateurs à effet cyclone 5 à suivre selon la direction longitudinale du canal d'alimentation 4.

De manière privilégiée, les séparateurs de flux 7 définissent une paroi incurvée de manière à décaler la direction du flux de gaz porteur entre le canal d'alimentation 4 et le séparateur par effet cyclone 5 de sorte que le gaz porteur qui circule selon la direction longitudinale circule tangentiellement dans le séparateur par effet cyclone 5. Cela permet d'avoir une séparation plus efficace.

Dans un mode de réalisation avantageux, le système de filtration 1 possède un premier nombre de séparateurs par effet cyclone 5, par exemple N séparateurs par effet cyclone 5, disposés d'un côté du canal d'alimentation 4. Les entrées 5a des séparateurs par effet cyclone 5 sont réparties dans le sens de la hauteur sur le premier nombre d'étages, c'est-à-dire N étages. En d'autres termes, les N entrées 5a définissent N étages différents pour capter le flux de gaz porteur. Le flux de gaz porteur est dévié dans chacun des séparateurs par effet cyclone 5 au moyen dudit premier nombre de déviateurs de flux 7, c'est-à-dire N déviateurs de flux 7. Les N déviateurs de flux 7 sont disposés consécutivement le long de l'axe longitudinal du canal d'alimentation et les N déviateurs de flux réduisent la section du canal d'alimentation d'une valeur égale à 1/N. Chaque déviateur de flux alimente un séparateur par effet cyclone 5 par un flux de gaz qui représente 1/N du flux initial qui remplit le canal d'alimentation. De manière préférentielle, chaque déviateur de flux 7 obstrue ou réduit la section du canal d'alimentation 4 d'une valeur égale à 1/N pour le reste du canal d'alimentation. En d'autres termes, la section active du canal d'alimentation 4 diminue à chaque fois qu'une portion du flux de gaz porteur est déviée vers un séparateur par effet cyclone 5.

Chaque entrée 5a à une hauteur h qui correspond à H/N avec H la hauteur initiale du canal d'alimentation 4.

La figure 2 représente la répartition des différents déviateurs de flux 7 dans le canal d'alimentation 4. Les huit déviateurs de flux 7 correspondant aux huit séparateurs par effet cyclone 5 possèdent une section de déviation totale qui est égale à la section initiale du canal d'alimentation 4. Les séries des déviateurs de flux 7 s'étendent depuis les parois latérales vers le centre du canal d'alimentation 4. Dans une série, les déviateurs de flux sont disposés les uns au-dessus des autres.

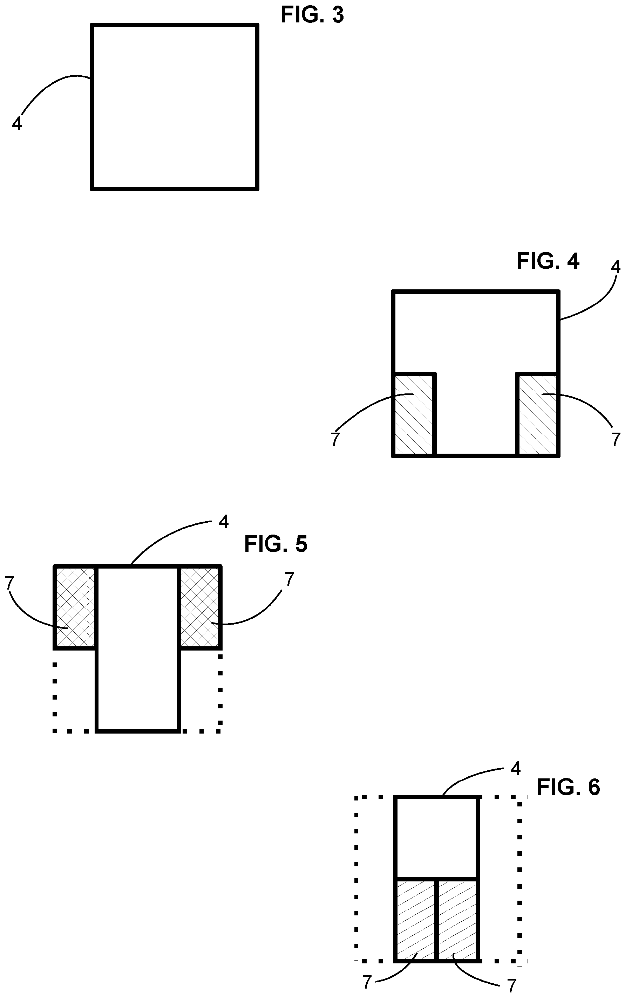

La figure 3, représente une section de l'entrée du canal d'alimentation 4 ce qui définit la valeur de la section initiale du canal d'alimentation 4. La figure 4 représente une vue en coupe du canal d'alimentation au démarrage des deux premiers déviateurs de flux destinés à alimenter les deux premiers séparateurs par effet cyclone 5. La figure 5 représente une vue en coupe du canal d'alimentation au démarrage des deux deuxièmes déviateurs de flux destinés à alimenter les deux deuxièmes séparateurs par effet cyclone 5. Le canal d'alimentation a été réduit en section par les deux premiers séparateurs de flux.

Dans un autre mode de réalisation, le système de filtration 1 possède un premier nombre de séparateurs par effet cyclone 5, par exemple N séparateurs par effet cyclone 5, disposés d'un côté du canal d'alimentation 4. Le nombre de séparateurs par effet cyclone 5 est un nombre pair. Les entrées des séparateurs par effet cyclone 5 sont réparties sur un second nombre d'étages qui correspond à la moitié du premier nombre, c'est-à-dire N/2 étages. Le flux de gaz porteur est dévié dans chacun des séparateurs par effet cyclone 5 au moyen dudit premier nombre de déviateurs de flux 7, c'est-à-dire N déviateurs de flux 7. Les N déviateurs de flux 7 sont disposés consécutivement le long de l'axe longitudinal du canal d'alimentation 4 et les N déviateurs de flux réduisent la section active du canal d'alimentation 4 d'une valeur égale à 1/N. Chaque déviateur de flux 7 alimente un séparateur par effet cyclone 5 par un flux de gaz qui représente 1/N du flux initial qui remplit le canal d'alimentation 4.

Les N déviateurs de flux 7 sont divisés en deux séries de deuxième nombre de déviateurs de flux 7, c'est-à-dire N/2. Chacune des séries s'étend d'une extrémité à l'autre selon la hauteur du canal d'alimentation 4. Chacune des deux séries des déviateurs de flux 7 définit N/2 étages. La section du canal d'alimentation 4 est divisée en deux portions égales selon la hauteur, c'est-à-dire selon une direction parallèle à l'axe central. De manière avantageuse, chaque série d'entrée capte une section du flux initial depuis une paroi latérale du canal d'alimentation vers la paroi latérale opposée.

La figure 1 illustre une configuration de système de filtration 1 avec huit séparateurs par effet cyclone 5. Seuls les quatre séparateurs par effet cyclone du côté gauche sont représentés. Les quatre entrées 5a sont réparties en deux séries de deux entrées 5a. La figure 2 illustre une vue des différents déviateurs de flux 7 dans le canal d'alimentation 4. Les huit déviateurs de flux 7 occupent une section égale à la section du canal d'alimentation 4 pour dévier tout le flux vers les séparateurs par effet cyclone 5.

Dans un autre mode de réalisation, le système de filtration 1 possède un premier nombre de séparateurs par effet cyclone 5, par exemple N séparateurs par effet cyclone 5, disposés d'un côté du canal d'alimentation 4. Les entrées des séparateurs par effet cyclone 5 sont réparties en n séries d'entrées avec n séries de déviateurs de flux 7. Chacune des n séries d'entrées possède N/n entrées avec N/n déviateurs de flux 7.

Chaque déviateur de flux 7 alimente un séparateur par effet cyclone 5 par un flux de gaz qui représente 1/N du flux initial qui remplit le canal d'alimentation 4. Chaque série de déviateurs de flux 7 occupe 1/n de la section du canal d'alimentation 4 par rapport à la section initiale du canal d'alimentation 4. Le flux de gaz porteur est dévié dans chacun des séparateurs par effet cyclone 5 au moyen dudit premier nombre de déviateurs de flux 7, c'est-à-dire N déviateurs de flux 7. Les N déviateurs de flux sont disposés consécutivement le long de l'axe longitudinal du canal d'alimentation 4 et les N déviateurs de flux 7 réduisent la section du canal d'alimentation 4 d'une valeur égale à 1/N. Le fonctionnement est identique à celui du mode de réalisation précédent

Dans un mode de réalisation particulier, le système de filtration possède 2N séparateurs par effet cyclone. Les 2N séparateurs par effet cyclone sont divisés en N séparateurs par effet cyclone du côté droit du canal d'alimentation 4 et N séparateurs du côté gauche du canal d'alimentation 4. Selon les configurations, les N entrées 5a et les N séparateurs de flux sont réparties en n séries, avec n un nombre entier non nul, par exemple 1, 2 ou 3. N est également un nombre entier non nul.

Dans un mode de réalisation particulier, les différents séparateurs par effet cyclone 5 possèdent tous la même valeur de section de déviation.

Une telle configuration permet d'optimiser la section du canal d'alimentation pour alimenter chacun des séparateurs à effet cyclone 5.

Préférentiellement, la section de déviation définie par un déviateur de flux 7 possède une hauteur h qui est supérieure à la largeur, de préférence la hauteur h est au moins deux fois supérieure à la largeur.

De manière à avoir une hauteur qui est supérieure à la largeur de la section de déviation, il est avantageux de choisir le nombre de séries de séparateurs par effet cyclone 5 ainsi que le nombre de séparateurs par effet cyclone 5 dans chaque série. Dans le mode de réalisation illustré à la figure 1, le système de filtration 1 possède huit séparateurs par effet cyclone avec quatre séparateurs par effet cyclone sur chacun des côtés du canal d'alimentation. Une telle configuration permet d'avoir une section proche du carré ce qui est préférentielle pour l'alimentation des séparateurs à effet cyclone 5. Selon les contraintes imposées, le nombre de séparateurs à utiliser et leur répartition définissent la section du canal d'alimentation 4 ou la section du canal d'alimentation définit le nombre de séparateurs à effet cyclone 5 à utiliser.

Dans un mode de réalisation particulièrement avantageux, le système de filtration 1 est formé par uniquement deux pièces en matériau polymère et qui peuvent être obtenues par injection. La première pièce définit le canal d'alimentation 4 ainsi que les séparateurs par effet cyclone 5 et les déviateurs de flux 7 le cas échéant. La deuxième pièce forme le capot 6 avec l'orifice 3 de sortie pour le gaz porteur. Il est alors particulièrement économique de former un système de séparation 1 performant pour la séparation de l'air et de l'huile à partir d'un brouillard d'huile.

La filtration d'un brouillard d'huile et plus généralement d'un aérosol est réalisée en injectant le brouillard à l'entrée du canal d'alimentation 4. Le flux de brouillard d'huile est divisé en une pluralité de flux élémentaires qui alimentent chacun un séparateur par effet cyclone 5. Chaque séparateur par effet cyclone 5 réalise la filtration pour extraire l'huile qui ressort par une sortie dédiée.

Les multiples séparateurs par effet cyclone 5 sont montés en parallèle et ils sont intégrés de manière compacte dans le système de filtration ce qui permet de former un système de filtration de petites dimensions tout en étant très efficace.

Bien que les exemples de réalisation décrivent la séparation d'un brouillard d'huile, le système de séparation peut être utilisé pour séparer les particules d'un aérosol, l'aérosol pouvant contenir des particules à l'état solide et/ou des particules à l'état liquide.

## Revendications

1. Système de filtration (1) d'un aérosol muni d'un gaz porteur et de particules comportant :
- un canal d'alimentation (4) ayant une première extrémité destinée à être connectée à un organe de fourniture configuré pour fournir l'aérosol ;
- une pluralité de séparateurs par effet cyclone (5), chaque séparateur par effet cyclone (5) ayant une entrée (5a) débouchant dans le canal d'alimentation (4) ; dans lequel plusieurs séparateurs par effet cyclone (5) de la pluralité de séparateurs par effet cyclone (5) et leurs entrées (5a) respectives sont disposés consécutivement le long du canal d'alimentation (4) et d'un même côté du canal d'alimentation (4) ;
- des déviateurs de flux (7) sont disposés dans le canal d'alimentation (4) pour dévier une partie d'un flux de l'atmosphère chargée en gouttelettes en direction d'un des séparateurs par effet cyclone (5) correspondants,
dans lequel la section du canal d'alimentation (4) est décroissante dans une direction qui s'éloigne de la première extrémité en direction de la pluralité de séparateurs par effet cyclone (5) ;
système de filtration (1) **caractérisé en ce que** des déviateurs de flux (7) sont disposés dans le canal d'alimentation (4) pour réduire de manière monotone la section active du canal d'alimentation (4), la section active du canal d'alimentation (4) diminuant à chaque fois qu'une portion du flux de gaz porteur est déviée vers un séparateur par effet cyclone par un des déviateurs de flux ; et **en ce que** deux entrées consécutives de deux séparateurs par effet cyclone (5) de la pluralité de séparateurs par effet cyclone (5) d'un même côté du canal d'alimentation (4) sont disposées à des hauteurs différentes.

2. Système de filtration (1) selon la revendication 1 dans lequel deux déviateurs de flux consécutifs présentent la même épaisseur et sont disposés à des hauteurs différentes qui correspondent respectivement à la hauteur du déviateur de flux correspondant.

3. Système de filtration (1) selon l'une des revendications 1 et 2 dans lequel le canal d'alimentation (4) est connecté à N séparateurs par effet cyclone et dans lequel chaque déviateur de flux (7) dévie 1/N de la section initiale du canal d'alimentation (4) vers un séparateur par effet cyclone correspondant et réduit la section du canal d'alimentation d'une valeur égale à 1/N pour les séparateurs par effet cyclone à suivre selon le sens d'avancement du flux d'aérosol.

4. Système selon l'une quelconque des revendications précédentes dans lequel la pluralité de séparateurs par effet cyclone (5) est divisée en deux séries de séparateurs à effet cyclone se faisant face perpendiculairement à un axe de circulation de l'aérosol et dans lequel deux entrées en vis-à-vis perpendiculairement à l'axe de circulation de l'aérosol sont à la même hauteur.

5. Système selon l'une quelconque des revendications précédentes constitué par uniquement deux pièces, une première pièce définissant la partie inférieure des séparateurs par effet cyclone (5), la partie inférieure du canal d'alimentation (4) et éventuellement les déviateurs de flux (7) le cas échéant, la deuxième pièce formant un capot refermant le canal d'alimentation (4) et refermant les séparateurs par effet cyclone (5).

6. Système selon l'une quelconque des revendications précédentes dans lequel lesdites deux entrées consécutives de deux séparateurs par effet cyclone (5) de la pluralité de séparateurs par effet cyclone (5) d'un même côté du canal d'alimentation (4) possèdent des sections différentes.

7. Procédé de filtration comportant les étapes suivantes :
- fournir un système de filtration selon l'une quelconque des revendications précédentes ;
- alimenter le système de filtration avec un aérosol ;
- récupérer des particules en sortie des séparateurs par effet cyclone (5).

8. Procédé de filtration selon la revendication précédente dans lequel l'aérosol est un brouillard d'huile et de l'huile est récupérée en sortie des séparateurs par effet cyclone (5).

## Patentansprüche

1. Filtriersystem (1) für ein mit einem Trägergas und Partikeln versehenes Aerosol, umfassend:
- einen Zuführkanal (4) mit einem ersten Ende, das dazu bestimmt ist, mit einem Versorgungsorgan verbunden zu sein, das dazu konfiguriert ist, das Aerosol bereitzustellen;
- eine Vielzahl von Zyklonabscheidern (5), wobei jeder Zyklonabscheider (5) einen Einlass (5a) aufweist, der in den Zuführkanal (4) mündet;
wobei mehrere Zyklonabscheider (5) von der Vielzahl von Zyklonabscheidern (5) und ihre jeweiligen Einlässe (5a) entlang des Zuführkanals (4) und auf derselben Seite des Zuführkanals (4) aufeinanderfolgend angeordnet sind;
- Deflektoren (7), die im Zuführkanal (4) angeordnet sind, um einen Teil einer Strömung der tröpfchenbeladenen Atmosphäre zu einem der entsprechenden Zyklonabscheider (5) abzulenken,
wobei der Querschnitt des Zuführkanals (4) in einer Richtung, die sich vom ersten Ende zu der Vielzahl von Zyklonabscheidern (5) entfernt, abnehmend ist; wobei das Filtriersystem (1) **dadurch gekennzeichnet ist, dass** Deflektoren (7) im Zuführkanal (4) angeordnet sind, um den aktiven Querschnitt des Zuführkanals (4) auf monotone Weise zu reduzieren, wobei der aktive Querschnitt des Zuführkanals (4) jedes Mal abnimmt, wenn ein Teil des Trägergasstroms durch einen der Deflektoren zu einem Zyklonabscheider abgelenkt wird;
und dass zwei aufeinanderfolgende Einlässe von zwei Zyklonabscheidern (5) von der Vielzahl von Zyklonabscheidern (5) auf einer selben Seite des Zuführkanals (4) in unterschiedlichen Höhen angeordnet sind.

2. Filtriersystem (1) nach Anspruch 1, wobei zwei aufeinanderfolgende Deflektoren die gleiche Dicke haben und in unterschiedlichen Höhen angeordnet sind, die jeweils der Höhe den entsprechenden Deflektoren entsprechen.

3. Filtriersystem (1) nach einem der Ansprüche 1 und 2, wobei der Zuführkanal (4) mit N Zyklonabscheidern verbunden ist, und wobei jeder Deflektor (7) 1/N des Anfangsquerschnitts des Zuführkanals (4) zu einem entsprechenden Zyklonabscheider ablenkt und den Querschnitt des Zuführkanals für die nachfolgenden Zyklonabscheider in der Strömungsrichtung des Aerosolstroms um 1/N reduziert.

4. System nach einem der vorherigen Ansprüche, wobei die Vielzahl von Zyklonabscheidern (5) in zwei Reihen von Zyklonabscheidern unterteilt ist, die sich senkrecht zu einer Strömungsachse des Aerosols gegenüberliegen, und wobei zwei senkrecht zur Strömungsachse des Aerosols gegenüberliegende Einlässe auf gleicher Höhe liegen.

5. System nach einem der vorherigen Ansprüche, das nur aus zwei Teilen aufgebaut ist, wobei ein erstes Teil den unteren Teil der Zyklonabscheider (5), den unteren Teil des Zuführkanals (4) und gegebenenfalls die Deflektoren (7) definiert, wobei das zweite Teil eine Abdeckung bildet, die den Zuführkanal (4) verschließt und die Zyklonabscheider (5) verschließt.

6. System nach einem der vorherigen Ansprüche, wobei die zwei aufeinanderfolgenden Einlässe von zwei Zyklonabscheidern (5) von der Vielzahl von Zyklonabscheidern (5) auf einer selben Seite des Zuführkanals (4) unterschiedliche Querschnitte haben.

7. Filtrierverfahren, umfassend die folgenden Schritte:
- Bereitstellen eines Filtersystems nach einem der vorherigen Ansprüche;
- Versorgen des Filtriersystems mit einem Aerosol;
- Rückgewinnen der Partikel am Ausgang der Zyklonabscheider (5).

8. Filtrierverfahren nach dem vorherigen Anspruch, wobei das Aerosol ein Ölnebel ist und am Ausgang der Zyklonabscheider (5) Öl zurückgewonnen wird.

## Claims

1. Filtration system (1) for an aerosol containing a carrier gas and particles comprising :
- a feed channel (4) having a first end designed to be connected to a supply member configured to supply the aerosol;
- a plurality of cyclone separators (5), each cyclone separator (5) having an inlet (5a) opening into the feed channel (4); wherein several cyclone separators (5) of the plurality of cyclone separators (5) and their respective inlets (5a) are arranged consecutively along the feed channel (4) and on the same side of the feed channel (4);
- flow diverters (7) are arranged in the feed channel (4) to divert part of a flow of the droplet-laden atmosphere towards one of the corresponding cyclone separators (5),
wherein the cross-section of the feed channel (4) decreases in a direction away from the first end towards the plurality of cyclone separators (5);
filtration system (1) **characterized in that** flow diverters (7) are arranged in the feed channel (4) to monotonically reduce the effective cross-section of the feed channel (4), the effective cross-section of the feed channel (4) decreasing each time a portion of the carrier gas flow is diverted to a cyclone separator by one of the flow diverters ;
and **in that** two consecutive inlets of two cyclone separators (5) of the plurality of cyclone separators (5) on the same side of the feed channel (4) are arranged at different heights.

2. Filtration system (1) according to claim 1 wherein two consecutive flow diverters have the same thickness and are arranged at different heights which respectively correspond to the height of the corresponding flow diverter.

3. Filtration system (1) according to one of claims 1 and 2 wherein the feed channel (4) is connected to N cyclone separators and wherein each flow diverter (7) diverts 1/N from the initial cross-section of the feed channel (4) to a corresponding cyclone separator and reduces the cross-section of the feed channel by a value equal to 1/N for the cyclone separators to follow according to the direction of advance of the aerosol flow.

4. System according to any one of the preceding claims wherein the plurality of cyclone separators (5) is divided into two series of cyclone separators facing each other perpendicularly to an aerosol flow axis and wherein two inlets facing each other perpendicularly to the aerosol flow axis are at the same height.

5. System according to any one of the preceding claims consisting of only two parts, a first part defining the lower part of the cyclone separators (5), the lower part of the feed channel (4) and possibly the flow diverters (7), the second part forming a cover closing the feed channel (4) and closing the cyclone separators (5).

6. System according to any one of the preceding claims wherein said two consecutive inlets of two cyclone separators (5) of the plurality of cyclone separators (5) on the same side of the feed channel (4) have different cross-sections.

7. Filtration method comprising the following steps:
- providing a filtration system according to any one of the preceding claims;
- feeding an aerosol to the filtration system;
- collecting particles at an outlet of the cyclone separator (5).

8. Filtration method according to the preceding claim wherein the aerosol is an oil mist and oil is collected at the outlet of the cyclone separators (5).
